# EUROPÄISCHE PATENTSCHRIFT

(11) **EP 1 148 290 B1**
(45) Veröffentlichungstag und Bekanntmachung des Hinweises auf die Patenterteilung: **13.09.2006**
(21) Anmeldenummer: 01108545.3
(22) Anmeldetag: 05.04.2001
(51) Int. Cl.: F21S 8/10, F21V 7/00, F21W 101/14

(54) **Reflektor für eine Fahrzeugleuchte**
Reflector for a vehicle lamp
Réflecteur pour lampe de véhicule

(30) Priorität: 20.04.2000 DE 10019556
(43) Veröffentlichungstag der Anmeldung: 24.10.2001
(73) Patentinhaber: Hella KGaA Hueck & Co., 59552 Lippstadt (DE)
(72) Erfinder: Mügge, Martin, 59590 Geseke (DE); Streich-Schulz, Klaus, 59555 Lippstadt (DE)

(56) Entgegenhaltungen:
- EP-A- 0 974 485
- DE-A- 19 820 656
- FR-A- 580 397
- FR-A- 667 539

## Beschreibung

Die Erfindung betrifft einen Reflektor für eine Fahrzeugleuchte nach dem Oberbegriff des Patentanspruchs 1.

Es sind Reflektoren für Fahrzeugleuchten bekannt, deren Kontur bzw. Rand in Abhängigkeit von dem vorgegebenen Design der Leuchte rechteckförmig, oval- oder kreisförmig ausgebildet ist. Die bekannten Reflektoren weisen eine Mehrzahl von Reflektorsegmenten auf, die auf eine in einem zentralen Bereich des Reflektors angeordnete Lichtquelle ausgerichtet sind. Zwar kann die in der zentralen Aufnahmeöffnung des Reflektors angeordnete Lichtquelle mehrere Lichtwendel aufweisen zur Ansteuerung von unterschiedlichen Lichtfunktionen, wie beispielsweise Schluss- und Nebelschlusslichtfunktion. Die Reflektorsegmente des Reflektors sind dabei stets für die unterschiedlichen Lichtfunktionen optisch wirksam. Zur Realisierung von unterschiedlichen Lichtfunktionen, wie beispielsweise einer Nebelschlusslicht- und einer Bremslichtfunktion, die nach den gesetzlichen Vorgaben einen Mindestabstand zueinander aufweisen müssen, ist es bislang notwendig, Reflektoren benachbart zueinander anzuordnen, auf deren Mittelachse jeweils die Lichtquellen angeordnet sind. Nachteilig an einer solchen Anordnung von Reflektoren ist, dass sie eine relativ große Quererstreckung aufweisen.

Aus der FR-580 397 ist ein Reflektor für eine Fahrzeugleuchte mit einer Mehrzahl von Teilreflektoren oder Reflektorkammern bekannt. Der Reflektor weist eine Mehrzahl von außermittig des Reflektors angeordneten Aufnahmeöffnungen auf, in denen jeweils eine Lichtquelle positioniert ist. Die Teilreflektoren bzw. Reflektorkammern des bekannten Reflektors sind nicht segmentiert ausgebildet.

Aufgabe der vorliegenden Erfindung ist es daher, einen Reflektor für Fahrzeugleuchten derart weiterzubilden, dass einem Reflektor mehrere Lichtfunktionen zugeordnet werden können, wobei der Reflektor aus mehreren Teilreflektoren bzw. Reflektorkammern besteht und er im Nichtbetriebszustand eine optisch ansprechende Erscheinung einerseits und eine möglichst geringe Querausdehnung andererseits aufweist.

Zur Lösung dieser Aufgabe weist die Erfindung die Merkmale des Patentanspruchs 1 auf.

Der besondere Vorteil des erfindungsgemäßen Reflektors besteht darin, dass die gesamten Reflektorsegmente der unterschiedlichen Teilreflektoren bzw. Reflektorkammern auf einen gemeinsamen zentralen Bereich des Reflektors ausgerichtet sind, obwohl mindestens zwei Lichtquellen in einem radialen Abstand zu der Mittelachse angeordnet sind. Hierdurch wird in dem Nichtbetriebszustand der dem Reflektor zugeordneten Lichtquellen ein optisch einheitlicher Eindruck des Reflektors gewährleistet. Vorteilhaft wird der optisch einheitliche Eindruck durch radial und/oder in Umfangsrichtung des zentralen Bereich des Reflektors ausgerichtete Reflektorsegmente der einzelnen Teilreflektoren ermöglicht. Die Reflektorsegmente weisen vorzugsweise hierzu radial ausgerichtete Begrenzungsseiten einerseits und in Umfangsrichtung ausgerichtete Begrenzungsseiten andererseits auf. Der konzentrische Eindruck des Reflektors wird unterstützt durch die Anordnung einer zusätzlichen Lichtquelle in dem zentralen Bereich des Reflektors.

Durch das Vorsehen eines quer zu der Reflektorfläche verlaufenden Abschirmelementes wird eine unerwünschte Streuung des von einer ersten Lichtquelle ausgesandten Lichtes durch die Reflexion an Reflektorsegmenten, die einer benachbarten zweiten Lichtquelle zugeordnet sind, verhindert. Vorteilhaft weist der erfindungsgemäße Reflektor eine geringere Quererstreckung auf als die Quererstreckung von zwei Reflektoren, auf deren Mittelachse jeweils eine Lichtquelle angeordnet ist.

Nach einer bevorzugten Ausführungsform der Erfindung sind die Reflektorsegmente der Reflektoroberfläche rotationssymmetrisch zu der Mittelachse des Reflektors ausgerichtet, wobei ein Außenrand des Reflektors oval- oder kreisförmig ausgebildet ist. Durch ein diametral zwischen zwei gegenüberliegenden Punkten des Außenrandes des Reflektors verlaufendes Abschirmelement werden zwei Reflektorkammern gebildet, wobei die jeweils den Reflektorkammern zugeordneten Lichtquellen in einer zu dem Abschirmelement senkrechten und durch die Mittelachse des Reflektors verlaufenden Ebene angeordnet sind. Hierdurch wird vorteilhaft ein Muster von konzentrischen Ringen des Reflektors erzeugt, wobei die Positionierung der Lichtquellen innerhalb dieses Musters beliebig ist. Alle Reflektorsegmente, auch jene zwischen Lichtquelle und Abschirmelement, sind optisch, lichttechnisch voll wirksam.

Nach einer Weiterbildung der Erfindung sind die Reflektorsegmente derart geformt, dass die Lichtstrahlen entsprechend einer vorgegebenen Lichtfunktion in Lichtabstrahlrichtung reflektiert werden. Vorteilhaft kann hierdurch eine Lichtfunktion gewünschter Lichtstärke erzeugt werden, die zu einem gewissen Grad unabhängig von der Formgebung des Reflektors selbst ist.

Nach einer weiteren Ausführungsform der Erfindung kann sich das Abschirmelement rotationssymmetrisch zu der Mittelachse des Reflektors erstrecken, wobei eine innere und eine äußere Reflektorkammer gebildet wird. Vorteilhaft kann in der äußeren Reflektorkammer eine Mehrzahl von kreisringförmig angeordneten Lichtquellen, vorzugsweise Leuchtdioden, angeordnet sein. Hierdurch lässt sich ein stilistisch ansprechender Eindruck sowohl in der Betriebsstellung als auch in der Nichtbetriebsstellung der Lichtquellen realisieren.

Ausführungsbeispiele der Erfindung werden nachfolgend anhand der Zeichnungen näher erläutert.

Es zeigen:
- Figur 1: eine Vorderansicht eines Reflektors nach einem ersten Ausführungsbeispiel,
- Figur 2: eine Vorderansicht eines Reflektors nach einem zweiten Ausführungsbeispiel und
- Figur 3: einen Querschnitt durch den Reflektor gemäß Figur 2.

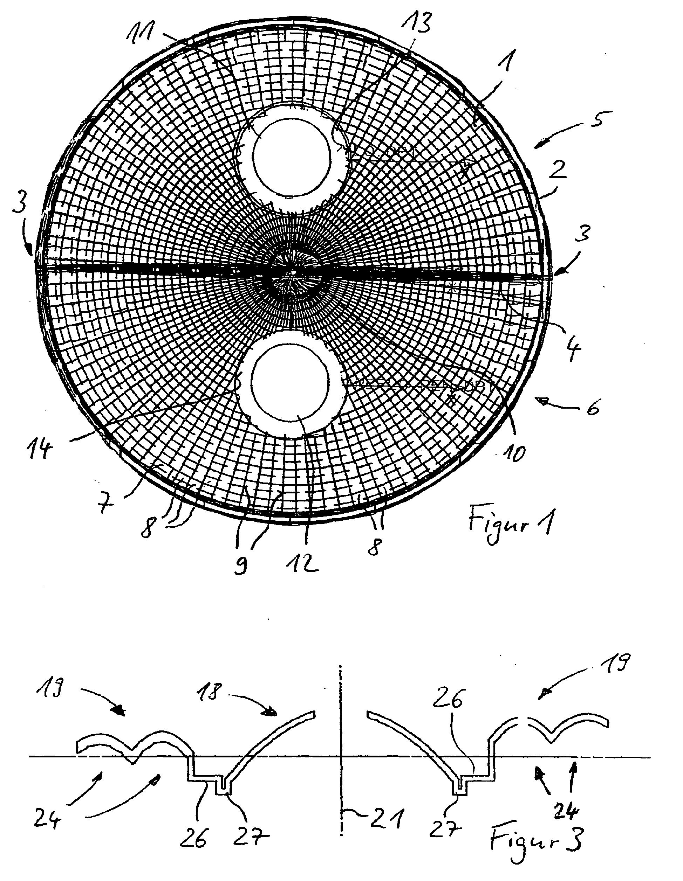

In Figur 1 ist ein Reflektor1 für eine Fahrzeugleuchte nach einem ersten Ausführungsbeispiel dargestellt. Der Reflektor 1 weist eine konkave Form auf, mit einem kreisförmigen Außenrand 2, der einer nicht dargestellten die Fahrzeugleuchte abdeckenden Lichtscheibe zugewandt ist. Diametral zwischen zwei gegenüberliegenden Punkten 3 des Außenrandes 2 erstreckt sich ein plattenförmiges Abschirmelement 4, das den Reflektor 1 in eine erste Reflektorkammer 5 und eine gleich große zweite Reflektorkammer 6 trennt. Das Abschirmelement 4 erstreckt sich vollflächig mit ellipsoid- oder paraboloidförmigen, unmittelbar an eine Reflektoroberfläche 7 angrenzenden Konturen von einem zentralen Bereich des Reflektors 1 zu den Punkten 3 des Außenrandes 2.

Die Reflektoroberfläche 7 weist eine Mehrzahl von erhabenen Reflektorsegmenten 8 auf, die in Projektion auf eine den Außenrand 2 schneidende Ebene radial verlaufende Begrenzungsflächen 9 aufweisen. Die Reflektorsegmente 8 erstrecken sich somit strahlen- und/oder ringförmig von bzw. zu einer Mittelachse 10 des Reflektors 1. Dadurch, dass das Abschirmelement 4 eine relativ geringe Dicke aufweist, entsteht im Nichtbetriebszustand von jeweils einer Kammer 5, 6 zugeordneten Lichtquellen 11, 12 ein homogener und einheitlicher optischer Eindruck des Reflektors 1.

Die Lichtquellen 11 und 12 sind jeweils in einer Aufnahmeöffnung 13 bzw. 14 angeordnet, deren Verbindungslinie senkrecht zu dem Abschirmelement 4 verläuft und die Mittelachse 10 schneidet. Hierdurch ergibt sich ein symmetrischer Aufbau des Reflektors 1.

Das Abschirmelement 4 weist eine solche Erstreckung in axialer Richtung auf, dass in der Betriebsstellung eines oder beider Lichtquellen 11, 12 die Reflektorsegmente 8 der der anderen Lichtquelle 11, 12 zugeordneten Reflektorkammer 5, 6 nicht mit Licht beaufschlagt werden können. Auf diese Weise kann eine unerwünschte Streustrahlung vermieden werden.

Vorzugsweise sind die Längsseiten des Abschirmelementes 4 nicht reflektierend und der der Lichtscheibe zugewandte Rand des Abschirmelementes 4 reflektierend ausgebildet. Vorteilhaft kann hierdurch der homogene optische Eindruck verstärkt werden. Alternativ kann das Abschirmelement 4 mittels Bedampfung auch vollständig reflektierend ausgebildet sein.

Alternativ können die Reflektorsegmente 8 der jeweiligen Reflektorkammern 5 und 6 derart geformt sein, dass die Lichtstrahlen entsprechend einer vorgegebenen Lichtfunktion in Lichtabstrahlrichtung reflektiert werden. Es wird hierdurch eine von der Form des Reflektors 1 in begrenztem Umfang unabhängige Lichtführung ermöglicht.

Die Lichtquellen 11,12 können als Glühlampe ausgebildet sein, wobei die erste Reflektorkammer 5 ein Schlusslicht und die zweite Reflektorkammer 6 ein Nebellicht erzeugt.

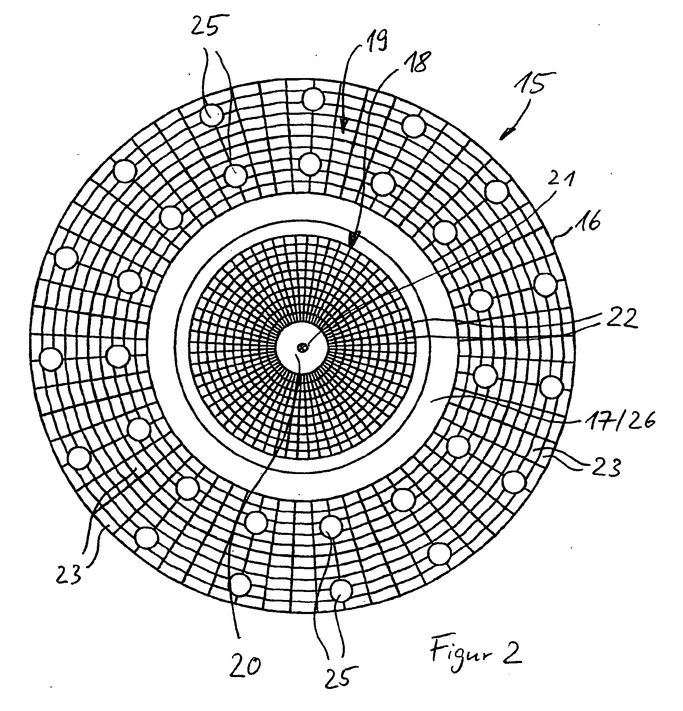

Nach einem zweiten Ausführungsbeispiel gemäß Figur 2 und 3 ist ein ebenfalls konkavförmiger Reflektor 15 mit einem kreisrunden Außenrand 16 ausgebildet. Im Unterschied zu dem vorhergehenden Ausführungsbeispiel ist ein ringförmiges Abschirmelement 17 vorgesehen, dass den Reflektor 15 in eine innere Reflektorkammer 18 und eine äußere Reflektorkammer 19 teilt.

Alternativ kann die Kontur die des Außenrandes 16 auch ovalförmig, dreieckig oder dergleichen ausgeführt sein, und zwar in Abhängigkeit von den stilistischen Vorgaben der Karosserieöffnung.

Die innere Reflektorkammer 18 weist in einem zentralen Bereich eine Aufnahmeöffnung 20 für eine Lichtquelle auf, deren optische Achse mit einer Mittelachse 21 des Reflektors 15 und der inneren und äußeren Reflektorkammer 18 und 19 zusammenfällt. Die innere Reflektorkammer 18 weist koaxial zu der Aufnahmeöffnung 20 ausgerichtete Ringe von Reflektorsegmenten 22 auf, die das von der Lichtquelle ausgesandte Licht entsprechend einer Lichtfunktion, beispielsweise einer Schlusslichtfunktion, reflektieren. In Übereinstimmung mit dem vorhergehenden Ausführungsbeispiel weisen die Reflektorsegmente 22 strahlenförmige oder radiale Begrenzungsflächen auf.

Die äußere Reflektorkammer 19 weist Reflektorsegmente 23 auf, deren Oberfläche größer ist als die der Reflektorsegmente 22. Die Ausrichtung und die Anordnung der Reflektorsegmente 23 stimmt mit den Reflektorsegmenten 22 der inneren Reflektorkammer 18 überein.

Die äußere Reflektorkammer 19 weist zwei äußere Reflektorteilkammern 24 auf, die sich jeweils ringförmig und in radialer Richtung benachbart zueinander erstrecken. Jede Reflektorteilkammer 24 weist eine Mehrzahl von ringförmig und konzentrisch zu der Mittelachse 21 angeordnete Aufnahmeöffnungen 25 auf, in denen nicht dargestellte Leuchtdioden als Lichtquellen zur Erzeugung einer Nebellichtfunktion angeordnet sind. Vorteilhaft ermöglichen die Reflektorsegmente 23 eine Bündelung der von den Leuchtdioden ausgesandten Lichtstrahlen, und zum anderen unterstützen sie aufgrund ihrer Anordnung den optisch homogenen Eindruck der Fahrzeugleuchte bzw. des Reflektors 15. Die Aufnahmeöffnungen 25 sind in einem regelmäßigen Abstand in Umfangsrichtung zueinander angeordnet. Sie weisen den gleichen Abstand zu der Mittelachse 21 auf. Zwischen der inneren Reflektorkammer 18 und der äußeren Reflektorkammer 19 erstreckt sich ein quer zur Mittelachse 21 verlaufender Querrand 26, der als Abschirmelement 17 dient. Alternativ können statt der Leuchtdioden auch Glühlampen vorgesehen sein.

Alternativ kann der Querrand 26 auch weggelassen werden, wobei ein vorstehender Randbereich 27 der inneren Reflektorkammer 18 eine optische Entkopplung der inneren zu der äußeren Reflektorkammer 18 bzw. 19 bewirkt.

Nach einer alternativen, nicht dargestellten Ausführungsform kann ein Reflektor auch muschelförmig mit einem ovalförmigen Außenrand ausgebildet sein. Der Außenrand des Reflektors muss nicht stetig oder bogenförmig sein, er kann auch rechteckförmig sein. Wesentlich ist, dass die Reflektorsegmente der Reflektoroberfläche jeweils zu einer gemeinsamen Mittelachse des Reflektors ausgerichtet sind.

Nach einem nicht dargestellten dritten Ausführungsbeispiel eines Reflektors ist ein Reflektor mit einem kreisrunden Außenrand ausgebildet. Alternativ kann der Außenrand auch dreieckförmig, rechteckförmig oder ovalförmig ausgebildet sein. Im Unterschied zu den vorhergehenden Ausführungsbeispielen weist der Reflektor keine Abschirmelemente auf. Der Reflektor weist eine Mehrzahl von Teilreflektoren auf, die kreisringförmig um einen zentralen Bereich angeordnet sind.

Ein innerer Teilreflektor weist eine Mehrzahl von konzentrisch angeordneten Aufnahmeöffnungen auf für Lichtquellen. In dem zentralen Bereich ist eine Aufnahmeöffnung für eine Lichtquelle angeordnet. Am Umfang des inneren Teilreflektors schließen sich mehrere mittlere Teilreflektoren an, die jeweils eine einzige Aufnahmeöffnung oder mehrere Aufnahmeöffnungen für mehrere Lichtquellen aufweisen können. Die mittleren Teilreflektoren sind von dem inneren Teilreflektor durch eine Grenzfläche, die sich durchgehend in Umfangsrichtung erstreckt, begrenzt. Die Form der Grenzfläche ist abhängig von den optischen Vorgaben der jeweiligen Teilreflektoren. Sie trennt lediglich die Teilreflektoren voneinander, ohne dass ein Abschirmung des von einem benachbarten Teilreflektors reflektierten Lichtes erfolgt.

Eine kreisringförmig angeordneten mittleren Teilreflektoren schließen sich am Umfang derselben äußere Teilreflektoren an, die jeweils eine einzige Aufnahmeöffnung aufweisen für eine Lichtquelle. Die äußeren Teilreflektoren sind zu den mittleren Teilreflektoren und den benachbarten äußeren Teilreflektoren durch die Grenzflächen getrennt.

Die Oberfläche der Teilreflektoren vermindert sich von dem zentralen Bereich hin zu dem Außenrand des Reflektors.

Die Teilreflektoren weisen jeweils eine Mehrzahl von Reflektorsegmenten 36 auf, wobei die Reflektorsegmente eines jeden Teilreflektors auf die in den Aufnahmeöffnungen eingesetzten Lichtquellen ausgerichtet sind.

Die Reflektorsegmente der Teilreflektoren bilden bei Projektion der Reflektorsegmente auf eine den Außenrand aufweisenden Ebene eine Mehrzahl von Radialreflektorsegmenten, die sich von dem zentralen Bereich durchgehend zu dem Außenrand erstrecken. Die Radialreflektorsegmente sind aus einer Mehrzahl von in radialer Richtung verlaufenden Reflektorsegmenten gebildet und weisen durchgehende radiale Begrenzungsseiten auf. Die benachbarten Reflektorsegmente der jeweiligen Radialreflektorsegmente sind durch in Umfangsrichtung verlaufende Begrenzungsseiten begrenzt. Die Begrenzungsseiten mehrerer Radialreflektorsegmente bilden zusammen konzentrische Begrenzungsseiten, die sich um den zentralen Bereich erstrecken.

Wesentlich an der Erfindung ist, dass die Oberfläche der Reflektorsegmente auf die in den jeweiligen Aufnahmeöffnungen angeordneten Lichtquellen ausgebildet sind, während die Begrenzungsseiten unabhängig davon auf den zentralen Bereich des Reflektors ausgerichtet sind.

Alternativ können die Glühlampen auch als SMD-Glühlampen (Surface Mounted Device-Glühlampen) ausgebildet sein.

## Patentansprüche

1. Reflektor für eine Fahrzeugleuchte mit einer Reflektoroberfläche, die eine Mehrzahl von Teilreflektoren (32) oder Reflektorkammern (5, 6, 18, 19) aufweist zur Umlenkung von durch eine in einer Aufnahmeöffnung des Reflektors angeordneten Lichtquelle ausgesandten Lichtstrahlen und einer Mehrzahl von Lichtquellen (11, 12)in außermittig des Reflektors (1, 15) angeordneten Aufnahmeöffnungen (12, 13, 25) des Reflektors (1, 15) **dadurch gekennzeichnet, dass** die Teilreflektoren (32) oder Reflektorkammern (5, 6, 18, 19) jeweils eine Mehrzahl von in radialer Richtung und/oder Umfangsrichtung eines zentralen Bereiches (10, 21) des Reflektors (1, 15) erstreckenden Reflektorsegmenten (8, 22, 23) aufweist, wobei die Reflektorsegmente (8, 22, 23) strahlenförmig auf den zentralen Bereich (10, 21) des Reflektors (1, 15) ausgerichtet sind.

2. Reflektor nach Anspruch 1, **dadurch gekennzeichnet, dass** die Reflektorsegmente (8, 22, 23) rotationssymmetrisch zu der Mittelachse (10, 21) des Reflektors (1,15) ausgerichtet sind und dass ein Außenrand (2,16) eine an die Karosserieöffnung angepasste Kontur aufweist.

3. Reflektor nach Anspruch 1 oder 2, **dadurch gekennzeichnet, dass** ein Außenrand (2, 16) oval- oder kreisförmig verläuft.

4. Reflektor nach einem der Ansprüche 1 bis 3, **dadurch gekennzeichnet, dass** die Reflektorsegmente als eine Mehrzahl von kreisförmig angeordneten Radialreflektorsegmenten um die Mittelachse (10, 21) des Reflektors (1, 15) angeordnet sind, wobei benachbarte Radialreflektorsegmente unmittelbar aneinanderliegen und radiale Begrenzungsseiten der Radialreflektorsegmente durchgehend von dem Außenrand (2, 16) des Reflektors (1, 15) zu einem zentralen Bereich des Reflektors (1, 15) verlaufen.

5. Reflektor nach einem der Ansprüche 1 bis 4, **dadurch gekennzeichnet, dass** der Reflektor mehrere kreisringförmige Teilreflektoren aufweist, denen jeweils eine Lichtquelle in einem mittleren Bereich des Teilreflektors zugeordnet sind.

6. Reflektor nach einem der Ansprüche 1 bis 5, **dadurch gekennzeichnet, dass** mindestens ein quer zu einer Reflektoroberfläche (7) verlaufendes Abschirmelement (4, 17) vorgesehen ist zur Abschirmung einer Lichtquelle zugeordneten Reflektorsegmenten (8, 22, 23) vor den von einer benachbarten Lichtquelle (11, 12) ausgesandten Lichtstrahlen.

7. Reflektor nach Anspruch 6, **dadurch gekennzeichnet, dass** das Abschirmelement (4, 17) eine solche Axialerstreckung aufweist, die gleich oder größer ist als ein in Lichtabstrahlrichtung des Reflektors (1, 15) zugewandter Rand einer Lichtquelle (11, 12).

8. Reflektor nach einem der Ansprüche 6 bis 7, **dadurch gekennzeichnet, dass** das Abschirmelement (4) von der Reflektoroberfläche abragt und im Wesentlichen quer zwischen zwei gegenüberliegenden Punkten (3) des Außenrandes (2) des Reflektors (1) verläuft.

9. Reflektor nach einem der Ansprüche 6 bis 8, **dadurch gekennzeichnet, dass** das Abschirmelement (4) plattenförmig ausgebildet ist und sich diametral durchgehend zwischen den gegenüberliegenden Punkten (3) des Reflektors (1) erstreckt zur Bildung von zwei Reflektorkammern (5, 6), in deren zentralen Bereich jeweils die Lichtquelle (11, 12) angeordnet ist.

10. Reflektor nach einem der Ansprüche 1 bis 9, **dadurch gekennzeichnet, dass** die Lichtquellen (11, 12) in einer gemeinsamen Ebene verlaufen, die zum einen senkrecht zu dem Abschirmelement (4) verläuft und zum anderen die Mittelachse (10) des Reflektors (1) schneidet.

11. Reflektor nach einem der Ansprüche 1 bis 10, **dadurch gekennzeichnet, dass** das die Leuchtelemente als Leuchtdioden und/oder als SMD-Glühlampen ausgebildet sind.

12. Reflektor nach Anspruch 6, **dadurch gekennzeichnet, dass** das Abschirmelement (17) rotationssymmetrisch zu der Mittelachse (21) des Reflektors (15) verläuft zur Bildung einer inneren und einer äußeren ringförmigen Reflektorkammer (18, 19, 24).

13. Reflektor nach Anspruch 12, **dadurch gekennzeichnet, dass** in der äußeren Reflektorkammer (19) eine Mehrzahl von ringförmig angeordneten Lichtquellen angeordnet sind.

14. Reflektor nach Anspruch 12 oder 13, **dadurch gekennzeichnet, dass** das Abschirmelement (17) als die Reflektorkammern (18, 19) verbindender Querrand (26) ausgebildet ist.

15. Reflektor nach einem der Ansprüche 1 bis 14, **dadurch gekennzeichnet, dass** die Reflektorsegmente (8, 22, 23) derart geformt sind, dass die Lichtstrahlen entsprechend einer vorgegebenen Lichtfunktion in Lichtabstrahlrichtung reflektiert werden.

## Claims

1. A reflector for a vehicle lamp having a reflector surface consisting of a plurality of partial reflectors (32) or reflector chambers (5, 6, 18, 19) for deflecting light beams emitted by a light source disposed in a location hole in the reflector, and having a plurality of light sources (11, 12) in location holes (12, 13, 25) in the reflector (1, 15) which are disposed off-centre in said reflector (1, 15), **characterized in that** each of the partial reflectors (32) or reflector chambers (5, 6, 18, 19) comprises a plurality of reflector segments (8, 22, 23) extending in radial direction and/or in circumferential direction relative to a central region (10, 21) of the reflector (1, 15), said reflector segments (8, 22, 23) being aligned in such a way as to extend radially towards the central region (10, 21) of the reflector (1, 15).

2. A reflector according to Claim 1, **characterized in that** the reflector segments (8, 22, 23) are aligned so as to have rotational symmetry with the median axis (10, 21) of the reflector (1, 15) and **in that** an outer edge (2, 16) has a profile which matches the opening in the vehicle body.

3. A reflector according to Claim 1 or 2, **characterized in that** an outer edge (2, 16) is oval or circular in shape.

4. A reflector according to one of Claims 1 to 3, **characterized in that** the reflector segments are arranged as a plurality of radial reflector segments disposed in the form of a circle about the median axis (10, 21) of the reflector (1, 15), adjacent radial reflector segments lying directly next to one another and radial boundary sides of the radial reflector segments extending continuously from the outer edge (2, 16) of the reflector (1, 15) to a central region of the reflector (1, 15).

5. A reflector according to one of Claims 1 to 4, **characterized in that** the reflector comprises a plurality of circular partial reflectors, with which in each case a light source disposed in a central region of the partial reflector is associated.

6. A reflector according to one of Claims 1 to 5, **characterized in that** at least one screening element (4, 17) is provided, which extends perpendicular to a reflector surface (7) for the purpose of screening reflector segments (8, 22, 23) associated with one light source from the light beams emitted from an adjacent light source (11, 12).

7. A reflector according to Claim 6, **characterized in that** the screening element (4, 17) has an axial dimension which is the same or greater than an edge of a light source (11, 12) facing in direction of the radiation of light of the reflector (1, 15).

8. A reflector according to one of Claims 6 or 7, **characterized in that** the screening element (4) projects from the reflector surface and extends substantially transversely between two points (3) lying opposite one another on the outer edge (2) of the reflector (1).

9. A reflector according to one of Claims 6 to 8, **characterized in that** the screening element (4) is formed in the shape of a plate and extends right across the diameter between opposite points (3) of the reflector (1) to form two reflector chambers (5, 6), the light sources (11, 12) being disposed in the central region of each of said reflector chambers (5, 6).

10. A reflector according to one of Claims 1 to 9, **characterized in that** the light sources (11, 12) lie in a common plane which on the one hand extends perpendicular to the screening element (4), and on the other hand intersects the median axis (10) of the reflector (1).

11. A reflector according to one of Claims 1 to 10, **characterized in that** the lighting elements take the form of LEDs and/or SMD bulbs.

12. A reflector according to Claim 6, **characterized in that** the screening element (17) extends in such a way as to have rotational symmetry with the median axis (21) of the reflector (15) to form an inner and an outer circular reflector chamber (18, 19, 24).

13. A reflector according to Claim 12, **characterized in that** a plurality of light sources are arranged in circles in the outer reflector chamber (19).

14. A reflector according to Claim 12 or 13, **characterized in that** the screening element (17) is formed as a transverse shoulder (26) linking the reflector chambers (18, 19).

15. A reflector according to one of Claims 1 to 14, **characterized in that** the reflector segments (8, 22, 23) are formed in such a way that, according to a given light function, the light beams are reflected in direction of the radiation of light.

## Revendications

1. Réflecteur pour un feu de véhicule, comportant une surface de réflecteur qui présente une multitude de réflecteurs partiels (32) ou de chambres de réflecteur (5, 6, 18, 19) pour dévier les rayons lumineux émis par une source lumineuse agencée dans une ouverture de réception du réflecteur, une multitude de sources lumineuses (11, 12) dans des ouverture de réception (12, 13, 25) du réflecteur (1, 15) qui sont agencées hors du centre du réflecteur (1, 15), **caractérisé en ce que** les réflecteurs partiels (32) ou les chambres de réflecteur (5, 6, 18, 19) présentent une multitude respective de segments de réflecteur (8, 22, 23) s'étendant en direction radiale et/ou en direction périphérique d'une région centrale (10, 21) du réflecteur (1, 15), les segments de réflecteur (8, 22, 23) étant orientés en forme de rayons vers la région centrale (10, 21) du réflecteur (1, 15).

2. Réflecteur selon la revendication 1, **caractérisé en ce que** les segments de réflecteur (8, 22, 23) sont orientés à symétrie de révolution par rapport à l'axe médian (10, 21) du réflecteur (1, 15) et **en ce qu'**un bord extérieur (2, 16) présente un contour adapté à l'ouverture de la carrosserie.

3. Réflecteur selon la revendication 1 ou 2, **caractérisé en ce qu'**un bord extérieur (2, 16) s'étend en forme d'ovale ou de cercle.

4. Réflecteur selon l'une des revendications 1 à 3, **caractérisé en ce que** les segments de réflecteur sont agencés en tant qu'une multitude de segments de réflecteur radiaux agencés en forme de cercle autour de l'axe médian (10, 21) du réflecteur (1, 15), des segments de réflecteur radiaux voisins étant directement adjacents les uns aux autres et des côtés de délimitation radiale des segments de réflecteur radiaux s'étendent en continu depuis le bord extérieur (2, 16) du réflecteur (1, 15) vers une région centrale du réflecteur (1, 15).

5. Réflecteur selon l'une des revendications 1 à 4, **caractérisé en ce que** le réflecteur présente plusieurs réflecteurs partiels de forme circulaire auxquels est associée une source lumineuse respective dans une région médiane du réflecteur partiel.

6. Réflecteur selon l'une des revendications 1 à 5, **caractérisé en ce qu'**il est prévu au moins un élément d'occultation (4, 17) qui s'étend transversalement à une surface de réflecteur (7) pour occulter des segments de réflecteur (8, 22, 23) associés à une source lumineuse vis-à-vis de rayons lumineux émis par une source lumineuse (11, 12) voisine.

7. Réflecteur selon la revendication 6, **caractérisé en ce que** l'élément d'occultation (4, 17) présente une extension axiale telle qu'elle est égale ou supérieure à un bord d'une source lumineuse (11, 12) tourné en direction de rayonnement lumineux du réflecteur (1, 15).

8. Réflecteur selon l'une des revendications 6 à 7, **caractérisé en ce que** l'élément d'occultation (4) fait saillie hors de la surface de réflecteur et s'étend sensiblement transversalement entre deux points (3) opposés du bord extérieur (2) du réflecteur (1).

9. Réflecteur selon l'une des revendications 6 à 8, **caractérisé en ce que** l'élément d'occultation (4) est réalisé en forme de plaque et s'étend de manière diamétralement continue entre les points (3) opposés du réflecteur (1) pour former deux chambres de réflecteur (5, 6) dans la région centrale desquelles la source lumineuse (11, 12) est respectivement agencée.

10. Réflecteur selon l'une des revendications 1 à 9, **caractérisé en ce que** les sources lumineuses (11, 12) s'étendent dans un plan commun qui s'étend d'une part perpendiculairement à l'élément d'occultation (4) et qui recoupe d'autre part l'axe médian (10) du réflecteur (1).

11. Réflecteur selon l'une des revendications 1 à 10, **caractérisé en ce que** les éléments de feu sont réalisés sous forme de diodes électroluminescentes et/ou de lampes à incandescence à montage en surface.

12. Réflecteur selon la revendication 6, **caractérisé en ce que** l'élément d'occultation (17) s'étend à symétrie de révolution par rapport à l'axe médian (21) du réflecteur (15) pour former une chambre de réflecteur intérieure et une chambre de réflecteur extérieure annulaire (18, 19, 24).

13. Réflecteur selon la revendication 12, **caractérisé en ce que** dans la chambre de réflecteur (19) sont agencées une multitude de sources lumineuses agencées de façon annulaire.

14. Réflecteur selon l'une des revendications 12 ou 13, **caractérisé en ce que** l'élément d'occultation (17) est réalisé sous forme de bord transversal (26) reliant les chambres de réflecteur (18, 19).

15. Réflecteur selon l'une des revendications 1 à 14, **caractérisé en ce que** les segments de réflecteur (8, 22, 23) sont formés de telle sorte que les rayons lumineux sont réfléchis en direction de rayonnement lumineux selon une fonction lumineuse prédéterminée.
